Europäisches Patentamt

European Patent Office

Office européen des brevets

(19)

(11) **EP 0 874 174 B1**

(12) **EUROPÄISCHE PATENTSCHRIFT**

(45) Veröffentlichungstag und Bekanntmachung des Hinweises auf die Patenterteilung:
**26.06.2002 Patentblatt 2002/26**

(51) Int Cl.[7]: **F16D 66/02**

(21) Anmeldenummer: **98105066.9**

(22) Anmeldetag: **20.03.1998**

(54) **Verfahren zur Zustandsüberwachung des Bremsbelagverschleisses bei Reibungsbremsen für Schienenfahrzeuge**

Method for monitoring lining waer of friction brakes for rail vehicles

Procédé de surveillance de l'état d'usure de garnitures de freins à friction pour véhicules de chemin de fer

(84) Benannte Vertragsstaaten:
**DE IT SE**

(30) Priorität: **25.04.1997 DE 19717555**

(43) Veröffentlichungstag der Anmeldung:
**28.10.1998 Patentblatt 1998/44**

(73) Patentinhaber: **DaimlerChrysler AG**
**70567 Stuttgart (DE)**

(72) Erfinder:
• **Jaun, Walter, Dipl.El.-Ing., ETH**
**8700 Küsnacht (CH)**

• **Deist, Lothar, Dipl.-Ing.**
**36211 Alheim (DE)**
• **Frank, Helge, Dipl.-Ing.**
**34134 Kassel (DE)**

(74) Vertreter: **Akers, Noel James**
**Howrey Simon Arnold & White,**
**City Point,**
**One Ropemaker Street**
**London EC2Y 9HS (GB)**

(56) Entgegenhaltungen:
EP-A- 0 598 997          DE-A- 3 407 716
DE-A- 3 824 985          DE-A- 4 316 993
FR-A- 2 733 830

**Beschreibung**

Die Erfindung bezieht sich auf ein Verfahren zur Zustandsüberwachung des Bremsbelagverschleißes bei Reibungsbremsen für Schienenfahrzeuge mit elektrisch gesteuertem Bremsventil, wobei

- die Reibarbeit als Maß für den Bremsbelagverschleiß herangezogen wird,
- die Reibarbeit kumuliert wird,
- der kumulierte Wert permanent mit einem vorgegebenem Grenzwert verglichen wird,
- die Meldung "Bremsbeläge austauschen" angezeigt wird, sobald der kumulierte Wert der Reibarbeit den vorgegebenen Grenzwert erreicht bzw. überschreitet.

Zur Zustandsüberwachung des Bremsbelagverschleißes bei Reibungsbremsen für Schienenfahrzeuge müssen üblicherweise aufwendige und damit kostenintensive Sichtkontrollen durch das Wartungspersonal vorgenommen werden, um die Funktionsfähigkeit der Bremsanlage jederzeit zu gewährleisten.

Aus der DE 43 16 993 A sind ein Verfahren und eine Vorrichtung zur Bestimmung des Zustands einer Fahrzeugbremsanlage bekannt, wobei das Fahrzeuggewicht, die Fahrzeugbewegung, die Rotationsbewegung der Räder und die Fahrbahnneigung während der Dauer eines Bremsvorganges ermittelt werden. Mittels dieser Messgrößen erfolgt die Berechnung der beim Bremsvorgang von jedem Bremsbelag zu verrichtenden Reibungsarbeit. Unter Verwendung der berechneten Reibungsarbeit, der erfassten Messgrößen und einer zugehörigen, abgespeicherten Abriebdicke-/Reibungsarbeit-Kennlinie für den Bremsbelag wird die Dicke des Abriebs jedes Bremsbelags für den Bremsvorgang ermittelt. Die Bestimmung von neuen Restdickenwerten erfolgt durch Subtraktion der für den Bremsvorgang ermittelten Abriebdickenwerte der Bremsbeläge von den vor dem Bremsvorgang vorliegenden Restdickenwerten.

Aus der DE 38 24 985 A ist eine Bremseinrichtung mit einer Hilfsvorrichtung zum Ermitteln des Verschleißzustandes der Bremse bekannt. Dabei wird der momentane Verschleißzustand durch Integration entsprechend bremsstärkenabhängiger Verschleißparameter über der Betätigungszeit ermittelt.

Der Erfindung liegt die Aufgabe zugrunde, ein Verfahren zur Zustandsüberwachung des Bremsbelagverschleißes bei Reibungsbremsen für Schienenfahrzeuge mit elektrisch gesteuerten Bremsventilen anzugeben, das aufwendige Sichtkontrollen durch das Wartungspersonal entbehrlich macht.

Diese Aufgabe wird alternativ in Verbindung mit den Merkmalen der Oberbegriffe erfindungsgemäß dadurch gelöst, dass die Reibarbeit $W_R$ aus dem Strom $i(t)$ durch das Bremsventil und der Reibungszahl $\mu$ gemäß

$$W_R = \int \mu f(i)\, d\varphi$$

ermittelt wird und für den Winkel $\varphi$ in Abhängigkeit der Winkelgeschwindigkeit $\omega$ und der Zeit t gilt:

$$\varphi = \int \omega\, dt.$$

Die mit der Erfindung erzielbaren Vorteile bestehen insbesondere darin, dass durch die vorgeschlagene elektronische Zustandsüberwachung des Bremsbelagverschleißes einerseits die Wartungskosten beim Betreiber gesenkt und andererseits die Zuverlässigkeit des Bremssystems des Fahrzeuges insgesamt erhöht werden. Die Bremsbeläge müssen aus Sicherheitsgründen nicht vorzeitig ausgewechselt werden, sondern erst, wenn der vorgegebene Grenzwert tatsächlich erreicht ist.

Das Verfahren mit Verwendung des durch das Bremsventil fließenden Stromes als Maß für die Reibarbeit ist universell bei allen Arten von Reibungsbremsen - wie Scheibenbremsen auf Hohlwellen, Radscheibenbremsen, Klotzbremsen - einsetzbar. Beim Verfahren wird die geleistete kumulierte Reibarbeit als Größe zur unmittelbaren Bestimmung des Bremsbelagverschleißes herangezogen.

Da die üblicherweise bereits vorhandene Fahrzeugelektronik mit Rechner, Speicher und Anzeigeeinheit verwendet wird, ist ein zusätzlicher Aufwand an Hardware nicht erforderlich. Vorteilhaft ist es auch, dass zusätzliche Sensoren oder schmutzanfällige und gegen Rütteln empfindliche Wegaufnehmer zur Ermittlung der Bremsbelagstärke entbehrlich sind, denn es werden lediglich bereits verfügbare Messgrößen verwendet. Damit wird neben der höheren Zuverlässigkeit des Bremssystems auch eine höhere Wirtschaftlichkeit erzielt.

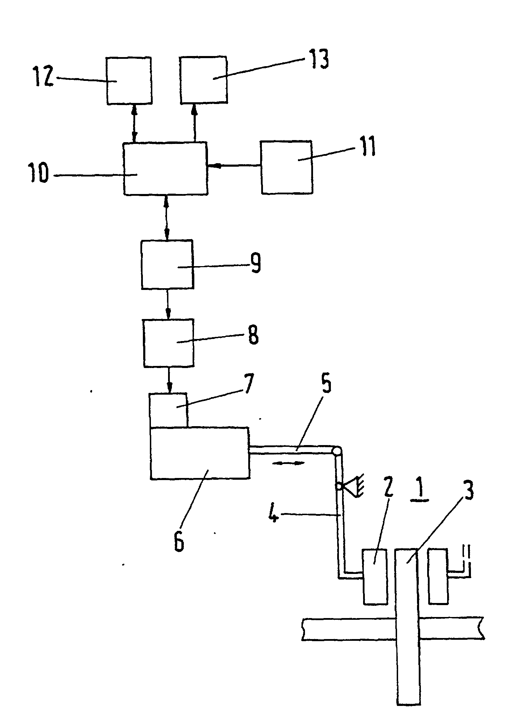

Die Erfindung wird nachstehend anhand des in der Zeichnung dargestellten Ausführungsbeispieles erläutert. In der einzigen Figur ist das prinzipielle Schema der elektronischen Zustandsüberwachung des Bremsbelagverschleißes bei Reibungsbremsen für Schienenfahrzeuge dargestellt. Es ist eine Reibungsbremse 1 eines Schienenfahrzeuges zu erkennen, bei der mit Bremsbelägen versehene Bremsbacken 2 gegen eine mit einer Fahrzeugachse verbundene Bremsscheibe 3 gepresst werden. Die Betätigung der Bremsbacken erfolgt über ein Bremsgestänge 4, welches mit der Kolbenstange 5 eines Bremszylinders 6 verbunden ist. Die Ansteuerung des Bremszylinders 6 zur Betätigung der Kolbenstange 5 erfolgt durch ein elektrisch oder elektropneumatisch gesteuertes Bremsventil 7.

Die Beaufschlagung des Bremsventils 7 erfolgt unter Einbeziehung eines Reglers 8 durch eine Bremssteuereinheit 9, welche unter Berücksichtigung von eingangsseitigen Signalen einer Fahrzeugelektronik 10 die einzustellende Bremskraft vorgibt. Die Fahrzeugelektronik 10 empfängt eingangsseitig Signale von Vorgabeeinrichtungen im Führerstand - beispielsweise die einzustellende Bremskraft - und Signale von Meßeinrichtungen - beispielsweise die aktuelle Geschwindigkeit - . Vorgabeeinrichtungen und Meßeinrichtungen sind mit Ziffer 10 bezeichnet. Die Fahrzeugelektronik 10 weist einen Rechner auf und ist mit einem Speicher 12 und mit einer Anzeigeeinheit 13 (Display) verbunden. Die Bedeutung und Wirkung dieser Baukomponenten wird weiter unten näher erläutert.

Nachfolgend wird zunächst der Einsatz eines elektropneumatisch gesteuerten Bremsventils 7 vorausgesetzt. Die als Maß für den Bremsbelagverschleiß dienende kumulierte Reibarbeit $W_R$ der Reibungsbremse 1 kann aus der Integration des Bremsdrehmomentes über den zurückgelegten Weg ermittelt werden. Allgemein gilt für die Reibarbeit $W_R$ in Abhängigkeit des Reibungsdrehmomentes $M_R$ und des Winkels $\varphi$:

$$W_R = \int M_R \, d\varphi$$

Zwischen dem Reibungsdrehmoment $M_R$, der materialabhängigen, vorgegebenen Reibungszahl $\mu$ und dem von der Bremssteuereinheit 9 erfaßten und der Fahrzeugelektronik 10 gemeldeten Bremsdrehmoment M besteht der Zusammenhang:

$$M_R = \mu \cdot M$$

Die Information über den Winkel $\varphi$ kann vorteilhaft in einfacher Weise über die Geschwindigkeit des Schienenfahrzeuges und hierzu korrespondierend die Winkelgeschwindigkeit $\omega$ abgeleitet werden, welche über die Fahrzeugelektronik 10 erfaßt werden. Es gilt der Zusammenhang:

$$\varphi = \int \omega \, dt,$$

wobei mit t die Zeit bezeichnet ist.

Nachfolgend wird der Einsatz eines elektrisch gesteuerten Bremsventils 7 vorausgesetzt. Falls das Bremsdrehmoment M von der Bremssteuereinheit 9 erfaßt und an die Fahrzeugelektronik 10 gemeldet wird, kann die Reibarbeit $W_R$ in gleicher Weise ermittelt werden, wie dies vorstehend für das elektropneumatisch gesteuerte Bremsventil erläutert ist.

Erfindungsgemäß besteht beim elektrisch gesteuerten Bremsventil 7 die Möglichkeit, die als Maß für den Bremsbelagverschleiß herangezogene kumulierte Reibarbeit $W_R$ direkt aus dem zeitlich variablen Strom i(t) durch das elektrisch gesteuerte Bremsventil 7 abzuleiten. Üblicherweise wird der Strom i(t) von der Bremssteuereinheit 9 in Abhängigkeit von der einzustellenden Bremskraft vorgegeben und in Verbindung mit dem Regler 8 geregelt, so daß sich kein Mehraufwand durch die Rückmeldung des Stromes an die Fahrzeugelektronik 10 ergibt. Für das Bremsdrehmoment M gilt:

$$M = f(i) \text{ oder vereinfacht } M = k \cdot i$$

mit k = Konstante. Damit gilt:

$$W_R = \int \mu f(i) \, d\varphi \text{ oder vereinfacht } W_R = \int \mu k \cdot i \, d\varphi$$

Damit ist der durch das Bremsventil 7 fließende Strom i direkt ein Maß der aufgewendeten Reibarbeit $W_R$ und kann der Fahrzeugelektronik 10 über die Bremssteuereinheit 9 gemeldet werden.

Wie vorstehend für das elektrisch oder elektropneumatisch gesteuerte Bremsventil 7 erläutert ist, wird allgemein die Reibarbeit $W_R$ durch die Fahrzeugelektronik 10 und die Bremssteuereinheit 9 erfaßt und kann in dem nichtflüchtigen Speicher 12 kumuliert werden. Die vom Bremsbelag-Hersteller vorgegebene kritische Grenze des erlaubten Verschleisses der Bremsbeläge hängt direkt von der geleisteten Reibarbeit $W_R$ ab, so daß der Fahrzeugelektronik 10 ein Grenzwert für $W_R$ vorgegeben werden kann, bei dessen Erreichen ein Austausch der Bremsbeläge erforderlich ist. Die Fahrzeugelektronik 10 vergleicht permanent den im Speicher 12 kumulierten Wert der Reibarbeit $W_R$ mit dem vorgegebenen Grenzwert und gibt die Meldung "Bremsbeläge austauschen" an der Anzeigeeinheit 13 ab, sobald der kumulierte Wert der Reibarbeit $W_R$ den Grenzwert erreicht bzw. überschreitet.

**Patentansprüche**

1. Verfahren zur Zustandsüberwachung des Bremsbelagverschleißes bei Reibungsbremsen für Schienenfahrzeuge mit elektrisch gesteuertem Bremsventil, wobei

   - die Reibarbeit als Maß für den Bremsbelagverschleiß herangezogen wird,
   - die Reibarbeit kumuliert wird,
   - der kumulierte Wert permanent mit einem vorgegebenem Grenzwert verglichen wird,
   - die Meldung "Bremsbeläge austauschen" angezeigt wird, sobald der kumulierte Wert der Reibarbeit den vorgegebenen Grenzwert erreicht bzw. überschreitet,

   **dadurch gekennzeichnet, dass** die Reibarbeit $W_R$ aus dem Strom i(t) durch das Bremsventil und der Reibungszahl $\mu$ gemäß

   $$W_R = \int \mu f(i) \, d\varphi$$

ermittelt wird und für den Winkel φ in Abhängigkeit der Winkelgeschwindigkeit ω und der Zeit t gilt:

$$\varphi = \int \omega dt.$$

## Claims

**1.** A method for monitoring the abrasion status of brake coverings at friction brakes of rail vehicles having an electrically controlled brake valve, wherein

- the work of friction is applied as the measure for the abrasion of the brake covering,
- the work of friction is cumulated,
- the cumulated value is permanently compared with a predetermined limit,
- the notice "change brake covering" is indicated as soon as the cumulated value of the work of friction equals or, respectively, exceeds the predetermined limit,

**characterized in that** the work of friction $W_R$ is calculated from the current i(t) flowing through the brake valve and the frictional resistance coefficient μ according to the equation

$$W_R = \int \mu f(i) d\varphi$$

and, depending from the angular motion rate ω and the time t, the angle φ is

$$\varphi = \int \omega dt.$$

## Revendications

**1.** Procédé de surveillance de l'état d'usure de garnitures de freins à friction pour véhicules de chemin de fer ayant un robinet de freinage commandé electriquement, où

- le travail de frottement est appliqué en tant que grandeur à mesurer l'usure de la garniturte de frein,
- le travail de frottement est cumulé,
- la valeur cumulée est comparée en permanence avec une valeur limite prédéterminée,
- la notification "changez les garnitures de frein" est affichée dès l'instant que la valeur cumulée du travail de frottement égale ladite valeur limite prédéterminée ou, selon le cas, la dépasse,

ledit procédé étant **caractérisé en ce que** le travail de frottement $W_R$ est calculé à partir du courant i(t) passant ledit robinet de freinage et du coefficient de frottement μ d'après l'équation

$$W_R = \int \mu f(i) d\varphi$$

et l'angle φ est représenté en fonction de la vitesse angulaire ω et du temps t par l'équation

$$\varphi = \int \omega dt.$$